# EUROPEAN PATENT APPLICATION

(11) **EP 4 711 906 A1**
(43) Date of publication of application: **18.03.2026**
(21) Application number: 24822274.7
(22) Date of filing: 29.02.2024
(51) Int. Cl.: G06F 3/0484, G06F 3/16, H04B 7/185, H04M 1/724, H04M 1/725, H04M 1/72409, H04M 1/72412, H04M 1/72454, H04M 1/72469, H04W 88/06, H04M 1/72516

(54) **SATELLITE CALL METHOD AND TERMINAL DEVICE**

(30) Priority: 16.06.2023 CN 202310730467
(71) Applicant: Honor Device Co., Ltd., Shenzhen, Guangdong 518040 (CN)
(72) Inventor: HE, Yanzhao, Shenzhen, Guangdong 518040 (CN)
(74) Representative: MERH-IP Matias Erny Reichl Hoffmann Patentanwälte PartG mbB
(86) International application number: PCT/CN2024/079188
(87) International publication number: WO 2024/255316

(57) **Abstract**

Embodiments of this application provide a satellite call method and a terminal device. The method includes: making a satellite call and displaying a call interface based on communication with a first satellite; determining an azimuth angle deviation and a pitch angle deviation, where the azimuth angle deviation is a deviation between an azimuth angle of an antenna radiation direction of the terminal device and an azimuth angle of a satellite transmission link direction, the pitch angle deviation is a deviation between a pitch angle of the antenna radiation direction and a pitch angle of the satellite transmission link direction, and the satellite transmission link direction is a direction from a position of the terminal device to a position of the first satellite; and displaying prompt information on the call interface if the azimuth angle deviation and the pitch angle deviation satisfy a preset condition, where the prompt information prompts a user that there is a possibility that the terminal device has a call terminal. The method helps the user to adjust the position of the terminal device in a timely manner, to avoid call interruption, and improve user experience.

## Description

This application claims priority to Chinese Patent Application No. 202310730467.0, filed with the China National Intellectual Property Administration on June 16, 2023 and entitled "SATELLITE CALL METHOD AND TERMINAL DEVICE", which is incorporated herein by reference in its entirety.

### TECHNICAL FIELD

This application relates to the field of electronic technologies, and more specifically, to a satellite call method and a terminal device.

### BACKGROUND

Satellite communication is communication performed between radio communication devices on the earth (including the ground and a low-layer atmosphere) by using a satellite as a relay. The satellite communication has advantages such as a large communication range, high reliability, and being not easily affected by a land disaster. Therefore, if an intelligent terminal device, for example, a mobile phone can implement the satellite communication, a breakthrough progress may be brought to the development thereof.

Because an air interface link of the satellite communication is long and a path loss of the satellite communication is large, a requirement for an over-the-air technology (over-the-air technology, OTA) in the terminal device is high. However, for the intelligent terminal device, antenna space is limited and individual antennas are small, resulting in a tight link budget. Therefore, in a satellite communication process, the intelligent terminal device needs to maintain a satellite-alignment attitude to maintain service continuity. A voice call in the satellite communication (a satellite call for short) is used as an example. In the satellite call process, the intelligent terminal device needs to maintain the satellite-alignment attitude; otherwise, the intelligent terminal device is prone to call interruption (that is, a call drop).

### SUMMARY

This application provides a satellite call method and a terminal device, to avoid satellite call interruption and improve user experience.

According to a first aspect, this application provides a satellite call method, the method is performed by a terminal device, and the method includes: making a satellite call and displaying a call interface based on communication with a first satellite; determining an azimuth angle deviation and a pitch angle deviation, where the azimuth angle deviation is a deviation between an azimuth angle of an antenna radiation direction of the terminal device and an azimuth angle of a satellite transmission link direction, the pitch angle deviation is a deviation between a pitch angle of the antenna radiation direction and a pitch angle of the satellite transmission link direction, and the satellite transmission link direction is a direction from a position of the terminal device to a position of the first satellite; and displaying prompt information on the call interface if the azimuth angle deviation and the pitch angle deviation satisfy a preset condition, where the prompt information prompts a user that there is a possibility that the terminal device has a call terminal.

The preset condition represents that the azimuth angle deviation and/or the pitch angle deviation of the terminal device deviate/deviates from a preset range, that is, the terminal device deviates from a preset position range, and there is a possibility that the terminal device fails to align with a satellite, resulting in the possibility of call interruption.

Optionally, the prompt information may be displayed in the form of text, a picture, an animation, or the like. For example, the prompt information may be text information such as "The mobile phone has deviated from the satellite-alignment position, and the call may be interrupted. Please adjust the direction of the mobile phone as soon as possible".

According to the satellite call method provided in the first aspect of this application, in a satellite call process, the azimuth angle deviation and the pitch angle deviation are determined, so that the prompt information on the call interface is displayed when the azimuth angle deviation and the pitch angle deviation satisfy the preset condition, where the prompt information prompts a user that there is a possibility that the call on the interrupted device is interrupted, to help the user to adjust a position of a mobile phone in a timely manner, so as to avoid call interruption, and improve user experience.

In a possible implementation, the preset condition is: The azimuth angle deviation exceeds a first azimuth angle range, and/or the pitch angle deviation exceeds a first pitch angle range.

Optionally, the first azimuth angle range may be the same as an azimuth angle range required for satellite alignment, and the first pitch angle range may be the same as a pitch angle range required for the satellite alignment.

In a specific embodiment, the first azimuth angle range may be [-10°, 10°], and the first pitch angle range may be [-5°, 5°].

In this implementation, the azimuth angle deviation exceeds the first azimuth angle range, and/or the pitch angle deviation exceeds the first pitch angle range, indicating that at least one of the azimuth angle deviation and the pitch angle deviation is relatively large, the current position of the terminal device deviates from the preset position range, and the antenna radiation direction significantly deviates from the satellite transmission link direction. There is a high possibility of satellite alignment failure. As a result, there is a high possibility of a decrease in call quality and call interruption. Therefore, the terminal device displays the prompt information on the call interface to accurately prompt the user of the situation and improve the user experience.

In a possible implementation, before the displaying prompt information on the call interface if the azimuth angle deviation and the pitch angle deviation satisfy a preset condition, the method further includes: obtaining signal strength of communication with the first satellite, where the preset condition is: The signal strength is less than a preset threshold, and the azimuth angle deviation exceeds a second azimuth angle range; or the preset condition is: The signal strength is less than the preset threshold, and the pitch angle deviation exceeds a second pitch angle range; or the preset condition is: The signal strength is less than the preset threshold, the azimuth angle deviation exceeds the second azimuth angle range, and the pitch angle deviation exceeds the second pitch angle range.

Optionally, the signal strength of the satellite communication may be represented in one or more of a received signal strength indicator (received signal strength indicator, RSSI), reference signal receiving power (reference signal receiving power, RSRP), reference signal receiving quality (reference signal receiving quality, RSRQ), a signal to interference plus noise ratio (signal to interference plus noise ratio, SINR), a signal to noise ratio (signal to noise ratio, SNR), and the like.

The signal strength of the satellite communication is less than the preset threshold, indicating that the signal strength is weak, current quality of satellite communication decreases, and call interruption may occur. The azimuth angle deviation exceeds the second azimuth angle range, and/or the pitch angle deviation exceeds the second pitch angle range, indicating that at least one of the azimuth angle deviation and the pitch angle deviation is relatively large, the current position of the terminal device deviates from the preset position range, and the antenna radiation direction significantly deviates from the satellite transmission link direction. There is a high possibility of satellite alignment failure, further indicating that there is a high possibility of a decrease in call quality and call interruption on the terminal device.

In this implementation, based on the azimuth angle deviation and the pitch angle deviation, the signal strength of the satellite communication is further added, and the signal strength is also used as a necessary condition for determining whether the terminal device deviates from the preset position range, to further improve determining accuracy. Therefore, the prompt information can be more accurately displayed on the call interface, and the user is accurately prompted with the situation.

Optionally, that the second azimuth angle range is greater than the first azimuth angle range, and/or the second pitch angle range is greater than the first pitch angle range means that determining conditions of the azimuth angle deviation and the pitch angle deviation are relaxed. In this way, the relaxed azimuth angle deviation and pitch angle deviation are used together with the signal strength of the satellite communication as a determining condition, to determine a current call quality condition, so that the determining condition is not excessively severe while accuracy of a determining result is improved, so that the user is not disturbed by excessively frequently displaying of the prompt information, thereby further improving user experience.

In a possible implementation, the call interface includes satellite-alignment indication information, and the satellite-alignment indication information indicates a status of alignment of the terminal device with the first satellite.

Optionally, the satellite-alignment indication information may be displayed in the form of text, a picture, an animation, or the like.

In a possible implementation, the satellite-alignment indication information is determined based on the azimuth angle deviation and the pitch angle deviation.

In this implementation, the terminal device displays the satellite-alignment indication information on the call interface based on the azimuth angle deviation and the pitch angle. In this way, the user can learn of a satellite-alignment status of the terminal device at any time in the satellite call process, to avoid satellite alignment failure caused by moving the position of the terminal device by the user, and further avoid call interruption, thereby improving user experience.

According to a second aspect, this application provides a satellite call method, the method is performed by a terminal device, and the method includes: making a satellite call based on communication with a first satellite, where a call mode of the satellite call is a mode other than a headset mode; and displaying a call interface, where the call interface does not include a switching control for the headset mode, or the call interface includes the switching control for the headset mode but the terminal device blocks a response to a first operation, where the first operation is an operation that a user taps the switching control for the headset mode, and the switching control for the headset mode is configured to switch the call mode to the headset mode.

In other words, in the method, in a satellite call process, the call mode is a non-headset mode. Optionally, the satellite call mode may be a first mode, a second mode, or a hands-free mode. The first mode is also referred to as a wired audio device mode, and is a mode for calling via an audio device in a wired connection to the terminal device. The second mode is also referred to as a wireless audio device mode, and is a mode for calling via an audio device in a wireless connection to the terminal device. The wireless connection may be a Bluetooth connection, a wireless local area network (wireless local area networks, WLAN), wireless fidelity (wireless fidelity, Wi-Fi), or the like. The audio device may be a sound box, an earphone, a vehicle-mounted device, or the like. The hands-free mode is a mode for calling via a speaker, a microphone, and the like of the terminal device. The headset mode is a mode for calling via a receiver, a microphone, and the like of the terminal device.

According to the satellite call method provided in the second aspect, the call mode is the non-headset mode, and the switching control for the headset mode is not displayed on the call interface, or the switching control for the headset mode is displayed, but a function of the switching control is blocked, so that the switching control cannot be operated. In this way, in the satellite call process, the user cannot make a call using the headset mode. Therefore, impact of radiation on the head of the user in the satellite call process can be reduced, thereby improving user experience. In addition, this can prevent the user from randomly moving a position of the terminal device due to using of the headset mode, and the terminal device does not deviate from a satellite-alignment position, to avoid call interruption, thereby further improving the user experience.

In a possible implementation, the method further includes: determining that the call mode is a first mode if there is a first audio device in a wired connection to the terminal device, where the first mode is a mode for calling via the first audio device.

In this implementation, when there is an audio device in a wired connection to the terminal device, the call mode is set to the wired audio device mode. In this way, a use habit and a use scenario of the user are better satisfied, and the user experience is improved.

In a possible implementation, the method further includes: If there is the first audio device in the wired connection to the terminal device and there is no audio device in a wireless connection to the terminal device, the call interface includes a switching control for a hands-free mode, where the switching control for the hands-free mode is configured to switch the call mode to the hands-free mode.

In this implementation, when there is an audio device in a wired connection to the terminal device and there is no audio device in a wireless connection to the terminal device, the switching control for the hands-free mode is displayed on the call interface, so that the user switches the call mode to the hands-free mode using the hands-free control, and a plurality of options are provided for the user, to satisfy a plurality of use requirements of the user, thereby further improving the user experience.

In a possible implementation, the method further includes: If there is the first audio device in the wired connection to the terminal device and there is a second audio device in a wireless connection to the terminal device, the call interface includes a switching control for a hands-free mode and a switching control for a second mode, where the switching control for the hands-free mode is configured to switch the call mode to the hands-free mode, the second mode is a mode for calling via the second audio device, and the switching control for the second mode is configured to switch the call mode to the second mode.

In this implementation, when there is an audio device in a wired connection to the terminal device, and there is an audio device in a wireless connection to the terminal device, the call interface displays the switching control for the hands-free mode and the switching control for the second mode, so that the user switches the call mode to the hands-free mode using the hands-free control, or switches the call mode to the second mode using the switching control for the second mode, and a plurality of options are provided for the user, to satisfy a plurality of use requirements of the user, thereby further improving the user experience.

In a possible implementation, the method further includes: If there is the first audio device in the wired connection to the terminal device and there is a second audio device in a wireless connection to the terminal device, the call interface includes a first control; and displaying a switching control for a hands-free mode and a switching control for a second mode in response to the user tapping the first control, where the switching control for the hands-free mode is configured to switch the call mode to the hands-free mode, the second mode is a mode for calling via the second audio device, and the switching control for the second mode is configured to switch the call mode to the second mode.

In this implementation, the user may trigger, by tapping the first control, displaying of the switching control for the hands-free mode and the switching control for the second mode, and when the user does not need to switch the call mode, only the first control is displayed, to facilitate arranging and displaying of controls in the interface, and the user experience is improved.

In a possible implementation, the method further includes: determining that the call mode is a second mode if there is a second audio device in a wireless connection to the terminal device and there is no audio device in a wired connection to the terminal device, where the second mode is a mode for calling via the second audio device.

In this implementation, when there is an audio device in a wireless connection to the terminal device and there is no audio device in a wired connection to the terminal device, the call mode is set to the wireless audio device mode. In this way, a requirement of the user for continuous use of the audio device is satisfied, a use habit and a use scenario of the user are better satisfied, and the user experience is improved.

In a possible implementation, the call interface includes a switching control for a hands-free mode, where the switching control for the hands-free mode is configured to switch the call mode to the hands-free mode.

In this implementation, the call interface includes the switching control for the hands-free mode, so that the user switches the call mode from the second mode to the hands-free mode, and a plurality of options are provided for the user, to satisfy different use habits and use scenario requirements of the user, thereby improving the user experience.

In a possible implementation, the method further includes: determining that the call mode is a hands-free mode if there is no audio device in a wired connection to the terminal device and there is no audio device in a wireless connection to the terminal device.

In a possible implementation, the method further includes: determining an azimuth angle deviation and a pitch angle deviation, where the azimuth angle deviation is a deviation between an azimuth angle of an antenna radiation direction of the terminal device and an azimuth angle of a satellite transmission link direction, the pitch angle deviation is a deviation between a pitch angle of the antenna radiation direction and a pitch angle of the satellite transmission link direction, and the satellite transmission link direction is a direction from a position of the terminal device to a position of the first satellite; and displaying prompt information on the call interface if the azimuth angle deviation and the pitch angle deviation satisfy a preset condition, where the prompt information prompts the user that there is a possibility that the terminal device has a call terminal.

In a possible implementation, the preset condition is: The azimuth angle deviation exceeds a first azimuth angle range, and/or the pitch angle deviation exceeds a first pitch angle range.

In a possible implementation, before the displaying prompt information on the call interface if the azimuth angle deviation and the pitch angle deviation satisfy a preset condition, the method further includes: obtaining signal strength of communication with the first satellite, where the preset condition is: The signal strength is less than a preset threshold, and the azimuth angle deviation exceeds a second azimuth angle range; or the preset condition is: The signal strength is less than the preset threshold, and the pitch angle deviation exceeds a second pitch angle range; or the preset condition is: The signal strength is less than the preset threshold, the azimuth angle deviation exceeds the second azimuth angle range, and the pitch angle deviation exceeds the second pitch angle range.

In a possible implementation, the call interface includes satellite-alignment indication information, and the satellite-alignment indication information indicates a status of alignment of the terminal device with the first satellite.

In a possible implementation, the satellite-alignment indication information is determined based on the azimuth angle deviation and the pitch angle deviation.

According to a third aspect, this application provides an apparatus, the apparatus is included in a terminal device, and the apparatus has a function of implementing a behavior of the terminal device in the first aspect and the possible implementations of the first aspect. The function may be implemented by hardware, or may be implemented by executing corresponding software by hardware. The hardware or the software includes one or more modules or units corresponding to the foregoing function, for example, a receiving module or unit, a processing module or unit, and the like.

According to a fourth aspect, this application provides an apparatus, the apparatus is included in a terminal device, and the apparatus has a function of implementing a behavior of the terminal device in the second aspect and the possible implementations of the second aspect. The function may be implemented by hardware, or may be implemented by executing corresponding software by hardware. The hardware or the software includes one or more modules or units corresponding to the foregoing function, for example, a receiving module or unit, a processing module or unit, and the like.

According to a fifth aspect, this application provides a terminal device, and the terminal device includes a processor, a memory, and an interface. The processor, the memory, and the interface cooperate with each other, to enable the terminal device to perform any one of the methods in the technical solutions of the first aspect or the second aspect.

According to a sixth aspect, this application provides a chip, including a processor. The processor is configured to read and execute a computer program stored in a memory to perform the method according to any one of the first aspect and the possible implementations of the first aspect, or the method according to any one of the second aspect and the possible implementations of the second aspect.

Optionally, the chip further includes the memory, and the memory is connected to the processor via a circuit or a wire.

Further optionally, the chip further includes a communication interface.

According to a seventh aspect, this application provides a computer-readable storage medium. The computer-readable storage medium stores a computer program. When the computer program is executed by a processor, the processor is enabled to perform any one of the methods in the technical solutions of the first aspect or the second aspect.

According to an eighth aspect, this application provides a computer program product. The computer program product includes computer program code, and when the computer program code runs on a terminal device, the terminal device is enabled to perform any one of the methods in the technical solutions of the first aspect or the second aspect.

### BRIEF DESCRIPTION OF DRAWINGS

FIG. 1 is a schematic diagram of a structure of a terminal device 100 according to an embodiment of the application;
FIG. 2 is a schematic diagram of a principle of implementing wireless communication based on a mobile communication module 150 according to an embodiment of this application;
FIG. 3 is a block diagram of a software structure of a terminal device 100 according to an embodiment of this application;
FIG. 4 is a schematic flowchart of a satellite call method according to an embodiment of this application;
FIG. 5 is a schematic diagram of a call interface according to an embodiment of this application;
FIG. 6 is a schematic diagram of another call interface according to an embodiment of this application;
FIG. 7 is a schematic flowchart of another satellite call method according to an embodiment of this application;
FIG. 8 is a schematic flowchart of still another satellite call method according to an embodiment of this application;
FIG. 9 is a schematic diagram of still another call interface according to an embodiment of this application;
FIG. 10 is a schematic diagram of still another call interface according to an embodiment of this application;
FIG. 11 is a schematic diagram of still another call interface according to an embodiment of this application; and
FIG. 12 is a schematic diagram of still another call interface according to an embodiment of this application.

### DESCRIPTION OF EMBODIMENTS

Technical solutions in embodiments of this application are described below with reference to the accompanying drawings in embodiments of this application. In the descriptions of embodiments of this application, unless otherwise specified, "/" represents "or". For example, A/B may represent A or B. In this specification, "and/or" describes only an association relationship between associated objects and indicates that three relationships may exist. For example, A and/or B may represent the following three cases: Only A exists, both A and B exist, and only B exists. In addition, in the descriptions of embodiments of this application, "a plurality of" means two or more.

The following terms "first", "second", and "third" are merely used for description, and cannot be understood as an indication or implication of relative importance or an implicit indication of a quantity of indicated technical features. Therefore, a feature limited by "first", "second", or "third" may explicitly or implicitly include one or more of the features.

Reference to "one embodiment", "some embodiments", or the like described in this specification of this application means that a specific feature, structure or characteristic described in combination with this embodiment is included in one or more embodiments of this application. Therefore, the statements "in one embodiment", "in some embodiments", "in some other embodiments", "in other embodiments", and the like in the differences in this specification of this application do not necessarily refer to the same embodiment, but mean "one or more but not all embodiments", unless otherwise specially emphasized in other ways. The terms "include", "contain", "have" and their variations mean "including but not limited to", unless otherwise specially emphasized in other ways.

To better understand embodiments of this application, the following explains the terms or concepts that may be involved in embodiments.

Satellite communication is communication in which an artificial earth satellite is used as a relay station to forward a radio wave to implement communication between two or more earth stations.

An over-the-air download technology is a technology for remote management of data and an application in an electronic device via an air interface of mobile communication.

A path loss is path attenuation, or referred to as a propagation loss, and is a loss generated due to propagation of an electric wave in space. The path loss is caused by radiation spread of transmit power and a propagation characteristic of a channel, and reflects a change of a received signal power average value within a macroscale.

A link budget (link budget) is an account of all gains and attenuation in a transmit end, a communication link, a propagation environment (an atmosphere, a coaxial cable, a wave guide, an optical fiber, and the like), and a receive end in a communication system. The link budget is usually used to estimate a longest distance between the transmit end and the receive end over which a signal can be successfully transmitted.

Satellite alignment means pair and pair-wise. Terminal device satellite alignment, or referred to as antenna satellite alignment, refers to a process of adjusting an azimuth angle, a pitch angle, and the like of an antenna, so that an antenna radiation direction is aligned with a satellite. The antenna radiation direction may be a central direction of an antenna beam.

Because antenna space is limited, and individual antennas are small, the link budget is tight for an intelligent terminal device (a terminal device for short). In a satellite communication process, the intelligent terminal device needs to maintain a satellite-alignment attitude; otherwise, the intelligent terminal device is prone to communication interruption. For a satellite call, after completing the satellite alignment, the user needs to keep the intelligent terminal in the attitude after the satellite alignment as much as possible. If the user moves a position of the terminal device, satellite alignment failure may be caused, resulting in call interruption, and user experience is affected.

In view of this, an embodiment of this application provides a satellite call method. Satellite-alignment indication information is displayed in a call interface, to indicate a satellite-alignment status. Meanwhile, the satellite-alignment status is monitored, and when a terminal device exceeds a preset satellite-alignment range, prompt information is displayed on the call interface, to prompt a user that the terminal device deviates, so that the user to adjust a position of the terminal device in a timely manner, to avoid call interruption, and improve user experience.

In addition, when the terminal device makes satellite communication, to improve uplink performance, transmit power of a used power amplifier (power amplifier, PA) is large, and usually needs to reach 4 watts (W) to 5 W. In this case, radiation of the terminal device is large, and for a head phantom scenario (for example, for a satellite call), a specific absorption rate (specific absorption rate, SAR) is prone to exceeding of a standard. However, if the PA transmit power is reduced to meet the SAR standard, communication interruption may occur, for example, the call is easily interrupted.

In view of this, an embodiment of this application further provides a satellite call method. A call mode is determined as a wireless audio device mode, a wired audio device mode, or a hands-free mode by determining an audio device connected to a terminal device, and a headset mode is removed from a call interface. In this way, a user can be prevented from answering a call using the headset mode, thereby reducing impact of radiation on the head of the user, and improving user experience. In addition, this can prevent the user from randomly moving a position of the terminal device due to using of the headset mode, and the terminal device does not deviate from a satellite-alignment position, to avoid call interruption, thereby further improving the user experience.

A satellite call method provided in embodiments of this application may be applied to a terminal device with a satellite communication function such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

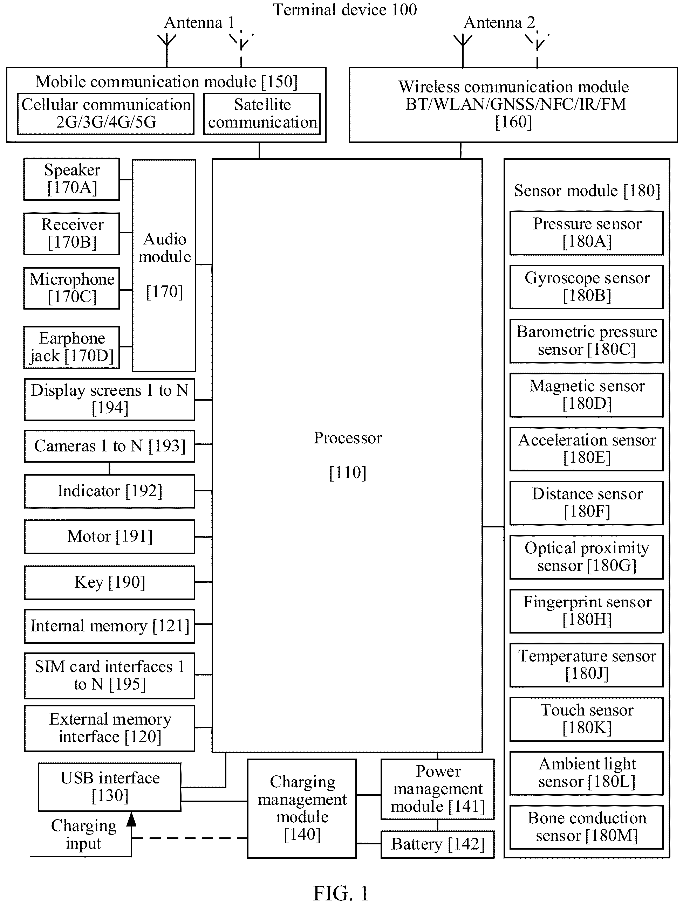

For example, FIG. 1 is a schematic diagram of a structure of a terminal device 100 according to an embodiment of the application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in embodiments of this application does not constitute a specific limitation to the terminal device 100. In some other embodiments of this application, the terminal device 100 may include more or fewer components than those shown in the figure, or some components may be combined, or some components may be divided, or different component arrangements may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on instruction operation code and a time-sequence signal, to complete control of instruction fetch and instruction execution.

A memory may be further disposed in the processor 110, to store instructions and data. In some embodiments, the memory in the processor 110 is a cache. The memory may store an instruction or data that has been used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be coupled to the touch sensor 180K, a charger, a flash light, the camera 193, and the like via different I2C bus interfaces. For example, the processor 110 may be coupled to the touch sensor 180K via the I2C interface, so that the processor 110 communicates with the touch sensor 180K via the I2C bus interface to implement a touch function of the terminal device 100.

The I2S interface may be configured to make audio communication. In some embodiments, the processor 110 may include a plurality of groups of I2S buses. The processor 110 may be coupled to the audio module 170 via the I2S bus to implement communication between the processor 110 and the audio module 170. In some embodiments, the audio module 170 may transmit an audio signal to the wireless communication module 160 via the I2S interface to implement a function of answering a call via a Bluetooth earphone.

The PCM interface may also be configured for audio communication, to sample, quantize, and encode an analog signal. In some embodiments, the audio module 170 may be coupled to the wireless communication module 160 via a PCM bus interface. In some embodiments, the audio module 170 may alternatively transmit an audio signal to the wireless communication module 160 via the PCM interface to implement a function of answering a call via a Bluetooth earphone. Both the I2S interface and the PCM interface may be used for audio communication.

The UART interface is a universal serial data bus used for asynchronous communication. The bus may be a two-way communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 via the UART interface, to implement a Bluetooth function. In some embodiments, the audio module 170 may transmit an audio signal to the wireless communication module 160 via the UART interface, to implement a function of music playback via the Bluetooth earphone.

The MIPI interface may be configured to connect the processor 110 and a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 via the CSI interface to implement a photographing function of the terminal device 100. The processor 110 communicates with the display screen 194 via the DSI interface to implement a display function of the terminal device 100.

The GPIO interface may be configured by using software. The GPIO interface may be configured as a control signal, or may be configured as a data signal. In some embodiments, the GPIO interface may be configured to connect the processor 110 and the camera 193, the display screen 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that complies with a USB standard specification, and may be specifically a Mini USB interface, a Micro USB interface, a USB Type C interface, or the like. The USB interface 130 may be configured to be connected to the charger to charge the terminal device 100, or may be used for data transmission between the terminal device 100 and a peripheral device. The USB interface 130 may alternatively be configured to be connected to an earphone to play audio via the earphone. The interface may alternatively be configured to connect to another electronic device, for example, an AR device.

It may be understood that an interface connection relationship between the modules shown in embodiments of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input from the wired charger via the USB interface 130. In some embodiments of wireless charging, the charging management module 140 may receive a wireless charging input via a wireless charging coil of the terminal device 100. When charging the battery 142, the charging management module 140 may further supply power to the terminal device by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communication module 160, and the like. The power management module 141 may be further configured to monitor battery capacity, a quantity of battery cycles, a battery health state (electric leakage and impedance), and other parameters. In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communication module 150, the wireless communication module 160, the modem processor, the baseband processor, and the like. The baseband processor is also referred to as a baseband chip. In embodiments of this application, the baseband processor may include a cellular baseband processor and a satellite baseband processor. Optionally, the modem processor, the cellular baseband processor, and the satellite baseband processor may be disposed in the processor 110. Certainly, in other embodiments, the modem processor, the cellular baseband processor, and the satellite baseband processor may alternatively be independent of the processor 110 and may be disposed in a same device as the mobile communication module 150 or other functional modules.

The antenna 1 and the antenna 2 are configured to transmit and receive an electromagnetic wave signal. Structures of the antenna 1 and the antenna 2 in FIG. 1 are merely examples. Each antenna in the terminal device 100 may be configured to cover a single communication frequency band or a plurality of communication frequency bands. Different antennas may also be reused to improve antenna utilization. For example, the antenna 1 may be reused as a diversity antenna of a wireless local area network. In some other embodiments, the antenna may be used in combination with a tuning switch.

In embodiments of this application, the mobile communication module 150 may provide solutions applied to the terminal device 100 for wireless communication such as cellular communication and satellite communication. The cellular communication may include communication such as 2G/3G/4G/5G.

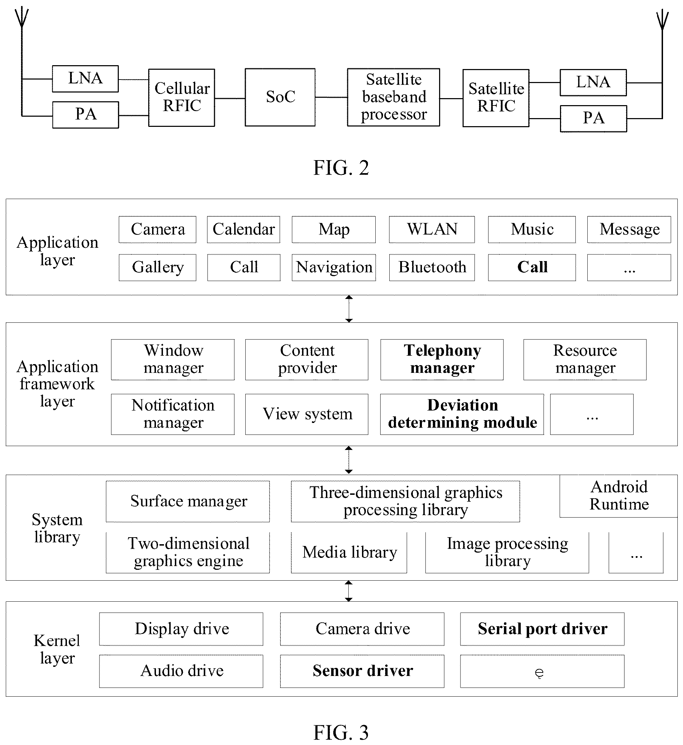

For example, FIG. 2 is a schematic diagram of a principle of implementing wireless communication based on a mobile communication module 150 according to an embodiment of this application. As shown in FIG. 2, the mobile communication module 150 may include a satellite radio frequency integrated circuit (radio frequency integrated circuit, RFIC), a cellular RFIC, at least two low noise amplifiers (low noise amplifier, LNA), and at least two PAs. Certainly, in addition to the modules shown in FIG. 2, the mobile communication module 150 may further include modules such as a filter and a switch. This is not limited in this embodiment of this application.

Optionally, this embodiment of this application is described by using an example in which a modem and a satellite baseband chip are disposed in the processor 110, and the satellite entrainment processor is independent of the processor 110. Some or all of the processing units in the processor 110 may be referred to as a system on chip (system on chip, SOC).

In a cellular communication process, the mobile communication module 150 can receive, via the antenna 1, an electromagnetic wave sent by a base station, perform processing such as filtering and amplification on the received electromagnetic wave by using the filter, the LAN, the PA, the cellular RFIC, and the like, and then transmit an electromagnetic wave to the modem processor for demodulation. The mobile communication module 150 may further amplify a signal modulated by the modem processor. The amplified signal is converted into an electromagnetic wave and radiated to the base station via the antenna 1.

The modem processor may include a modulator and a demodulator. The modulator is configured to modulate a low-frequency baseband signal to be transmitted into a medium-high frequency signal. The demodulator is configured to demodulate the received electromagnetic wave signal into a low-frequency baseband signal. Then, the demodulator then transmits the demodulated low-frequency baseband signal to the cellular baseband processor for processing. After being processed by the cellular baseband processor, the low-frequency baseband signal is transmitted to the application processor. The application processor outputs a sound signal via an audio device (not limited to a speaker 170A, a receiver 170B, and the like), or displays an image or a video via the display screen 194. In some embodiments, the modem processor may be an independent device.

In the satellite communication process, the mobile communication module 150 can receive, via the antenna 1, an electromagnetic wave sent by a satellite, perform processing such as filtering and amplification on the received electromagnetic wave by using the filter, the LAN, the PA, the satellite RFIC, and the like, and then transmit an electromagnetic wave to the satellite baseband processor for signal processing and protocol processing. The mobile communication module 150 may further amplify a signal modulated by the modem processor. The amplified signal is converted into an electromagnetic wave and radiated to the satellite via the antenna 1.

The wireless communication module 160 may provide a solution applied to the terminal device 100 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices that integrate at least one communication processing module. The wireless communication module 160 receives an electromagnetic wave via the antenna 2, performs frequency modulation and filtering on the electromagnetic wave signal, and sends a processed signal to the processor 110. The wireless communication module 160 may further receive a to-be-sent signal from the processor 110, and perform frequency modulation and amplification on the to-be-sent signal. The amplified signal is converted into an electromagnetic wave and radiated out via the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-CDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), a satellite based augmentation system (satellite based augmentation systems, SBAS), and/or the like.

The terminal device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the terminal device 100 may include 1 or N display screens 194. N is a positive integer greater than 1.

The terminal device 100 may implement a photographing function by using the ISP, the camera 193, the video codec, the GPU, the display screen 194, the application processor, and the like.

The ISP is configured to process data fed back by the camera 193. For example, during photographing, a shutter is enabled, light is transferred to a camera photosensitive element through a lens, an optical signal is converted into an electrical signal, and the camera photosensitive element transfers the electrical signal to the ISP for processing, to convert the electrical signal into an image visible to naked eyes. The ISP may alternatively perform algorithm optimization on noise, brightness, and a skin tone of the image. The ISP may further optimize parameters such as exposure and color temperature of a photographing scene. In some embodiments, the ISP may be arranged in the camera 193.

The camera 193 is configured to capture a static image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP. The ISP converts the electrical signal into a digital image signal. The ISP outputs the digital image signal to the DSP for processing. The DSP converts the digital image signal into a standard RGB, YUV, or another format image signal. In some embodiments, the terminal device 100 may include one or N cameras 193, where N is a positive integer greater than 1.

The digital signal processor is configured to process a digital signal. In addition to processing a digital image signal, the digital signal processor may further process another digital signal. For example, when the terminal device 100 selects a frequency, the digital signal processor is configured to perform Fourier transform and the like on frequency energy.

The video codec is configured to compress or decompress a digital video. The terminal device 100 supports one or more video codecs. In this way, the terminal device 100 may play back or record videos in a plurality of coding formats, for example, moving picture experts group (moving picture experts group, MPEG) 1, MPEG 2, MPEG 3, and MPEG 4.

The NPU is a neural-network (neural-network, NN) computing processor, and quickly processes input information by using a biological neural network structure such as a mode of transmission between human-brain nerve cells, and may further constantly perform self-learning. Applications such as intelligent cognition of the terminal device 100, such as image recognition, facial recognition, speech recognition, and text understanding, can be implemented by using the NPU.

The external memory interface 120 may be configured to be connected to an external storage card, for example, a Micro SD card, to expand a storage capacity of the terminal device 100. The external storage card communicates with the processor 110 via the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various functional applications and data processing of the terminal device 100. The internal memory 121 may include a program storage area and a data storage area. The program storage area may store an operating system, an application required by at least one function (such as a sound playback function and an image display function), and the like. The data storage region may store data (such as audio data and an address book) created during use of the terminal device 100, and the like. In addition, the internal memory 121 may include a high-speed random access memory, and may further include a non-volatile memory, for example, at least one magnetic disk storage device, a flash memory device, or a universal flash storage (universal flash storage, UFS).

The terminal device 100 may implement an audio function by using the audio module 170, the speaker 170A, the receiver 170B, the microphone 170C, the earphone jack 170D, the application processor, and the like, for example, implement a music playback function and a recording function.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal device 100 may allow for listening to music or answering a hands-free call through the speaker 170A.

The receiver 170B, also referred to as a "headset", is configured to convert an electrical audio signal into a sound signal. When a call or voice information is answered or listened to on the terminal device 100, the receiver 170B may be placed close to a human ear to answer a voice.

The microphone 170C, also referred to as a "mic" or "mike", is configured to convert a sound signal into an electrical signal. When making a call or sending voice information, a user may make a sound approaching the microphone 170C through the mouth, to input a sound signal into the microphone 170C. At least one microphone 170C may be disposed in the terminal device 100. In some other embodiments, two microphones 170C may be disposed in the terminal device 100, to collect a sound signal and implement a noise reduction function. In some other embodiments, three, four, or more microphones 170C may be alternatively disposed in the terminal device 100, to collect a sound signal, implement noise reduction, recognize a sound source, implement a directional recording function, and the like.

The earphone jack 170D is configured to be connected to a wired earphone. The earphone jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal to an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having conductive materials. When force is applied onto the pressure sensor 180A, capacitance between electrodes changes. The terminal device 100 determines intensity of the pressure based on the change in the capacitance. When a touch operation is performed on the display screen 194, the terminal device 100 measures strength of the touch operation based on the pressure sensor 180A. The terminal device 100 may further calculate a touch position based on a detection signal of the pressure sensor 180A. In some embodiments, touch operations performed on a same touch position but with different touch operation strength may correspond to different operation instructions. For example, when a touch operation having touch operation strength that is less than a first pressure threshold is performed on a short message application icon, an instruction of checking a short message is executed. When a touch operation having touch operation strength that is greater than or equal to the first pressure threshold is performed on the short message application icon, an instruction of creating a short message is executed.

The gyroscope sensor 180B may be configured to determine a motion attitude of the terminal device 100. In some embodiments, angular velocities of the terminal device 100 around three axes (that is, x, y, and z axes) may be determined using the gyroscope sensor 180B. The gyroscope sensor 180B may be configured for image anti-jitter during photographing. For example, when the shutter is pressed, the gyroscope sensor 180B measures an angle at which the terminal device 100 jitters, calculates, based on the angle, a distance for which a lens module needs to compensate, and allows the lens to cancel the jitter of the terminal device 100 by performing reverse movement, to implement anti-jitter. The gyroscope sensor 180B may be further used in scenarios such as navigation and a motion sensing game.

In this embodiment of this application, the gyroscope sensor 180B may be further configured to collect a motion attitude of the terminal device 100 in a satellite call process, to determine an azimuth angle, a pitch angle, and the like of an antenna radiation direction of the terminal device 100.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may use the magnetic sensor 180D to detect opening or closing of a flip leather case. In some embodiments, when the terminal device 100 is a clamshell phone, the terminal device 100 may detect opening or closing of a flip cover based on the magnetic sensor 180D. Further, based on the detected opening or closing state of the leather case or the detected opening or closing state of the flip cover, a feature such as automatic unlocking of the flip cover is set.

Optionally, in this embodiment of this application, the magnetic sensor 180D may further include a magnetometer. The terminal device 100 may obtain, by using the magnetometer, geomagnetic information of a site at which the terminal device 100 is located. Specifically, the terminal device 100 may measure angles between a reference direction of the terminal device 100 and four directions, namely, an east direction, a south direction, a west direction, and a north direction, in a magnetic north coordinate system by using the magnetometer, to determine an orientation of the reference direction of the terminal device 100 in a geomagnetic coordinate system, so as to determine the azimuth angle, the pitch angle, and the like of the antenna radiation direction of the terminal device 100. The reference direction of the terminal device 100 may be a direction parallel to the display screen of the terminal device 100 and perpendicular to a top frame of the terminal device 100.

The acceleration sensor 180E may measure an acceleration value of the terminal device 100 in each direction (generally three axes). When the terminal device 100 is still, a gravity value and a gravity direction may be measured. The acceleration sensor 180E may be further configured to recognize an attitude of the terminal device, and is applied to applications such as switchover between horizontal and vertical screens and a pedometer.

The distance sensor 180F is configured to measure a distance. The terminal device 100 may measure the distance in an infrared or laser manner. In some embodiments, in a photographing scenario, the terminal device 100 may measure the distance by using the distance sensor 180F to implement fast focusing.

The optical proximity sensor 180G may include, for example, a light-emitting diode (LED) and an optical detector, for example, a photodiode. The light-emitting diode may be an infrared light-emitting diode. The terminal device 100 emits infrared light through the light-emitting diode. The terminal device 100 uses the photodiode to detect infrared reflected light from an object nearby. When sufficient reflected light is detected, it may be determined that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear to make a call, to automatically turn off the screen for power saving. The optical proximity sensor 180G may be further configured to automatically unlock and lock the screen in a holster mode and a pocket mode.

The ambient light sensor 180L is configured to perceive ambient light brightness. The terminal device 100 may adaptively adjust brightness of the display screen 194 based on the perceived ambient light brightness. The ambient light sensor 180L may be further configured to automatically adjust white balance during photographing. The ambient light sensor 180L may further cooperate with the optical proximity sensor 180G to detect whether the terminal device 100 is in a pocket to avoid a false touch.

The fingerprint sensor 180H is configured to collect a fingerprint. The terminal device 100 may implement fingerprint unlock, application lock accessing, fingerprint photographing, fingerprint-based call answering, and the like by using a feature of the collected fingerprint.

The temperature sensor 180J is configured to detect temperature. In some embodiments, the terminal device 100 executes a temperature processing strategy based on the temperature detected by the temperature sensor 180J. For example, when the temperature reported by the temperature sensor 180J exceeds a threshold, the terminal device 100 reduces performance of a processor located near the temperature sensor 180J, to reduce power consumption and implement thermal protection. In other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 increases an output voltage of the battery 142, to avoid abnormal shutdown caused by a low temperature.

The touch sensor 180K is also referred to as a "touch panel". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided on the display 194. In some other embodiments, the touch sensor 180K may alternatively be disposed on a surface of the terminal device 100 in a position different from that of the display screen 194.

The bone conduction sensor 180M may obtain a vibration signal. In some embodiments, the bone conduction sensor 180M may obtain a vibration signal of a vibrating bone block of a human body's vocal part. The bone conduction sensor 180M may be further in contact with a human body's pulse and receive a blood pressure pulsating signal. In some embodiments, the bone conduction sensor 180M may alternatively be disposed in an earphone and combined into a bone conduction earphone. The audio module 170 can obtain, based on the vibration signal of the vocal vibrating bone block obtained by the bone conduction sensor 180M, a voice signal through parsing to implement a voice function. The application processor can parse heart rate information based on the blood pressure pulsating signal obtained by the bone conduction sensor 180M to implement a heart rate detection function.

The key 190 includes a power-on key, a volume key, and the like. The key 190 may be a mechanical key or may be a touch key. The terminal device 100 may receive a key input, and generate a key signal input related to user setting and function control of the terminal device 100.

The motor 191 may generate a vibration prompt. The motor 191 may be configured to provide a vibration prompt for an incoming call, and may alternatively be configured to provide vibration feedback for a touch. For example, the motor 191 may correspond to different vibration feedback effects for touch operations on different applications (such as photographing and audio playback). The motor 191 may further correspond to different vibration feedback effects for touch operations on different areas of the display screen 194. Different application scenarios (such as time reminding, information receiving, an alarm clock, and a game) may also correspond to different vibration feedback effects. The touch vibration feedback effect may be further customized.

The indicator 192 may be an indicator light, and may be configured to indicate a charging state and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to be in contact with and be separated from the terminal device 100. The terminal device 100 supports 1 or N SIM card interfaces. N is a positive integer greater than 1. The SIM card interface 195 supports a Nano SIM card, a Micro SIM card, a SIM card, and the like. A plurality of cards may be simultaneously inserted into a same SIM card interface 195. Types of the plurality of cards may be the same or different. The SIM card interface 195 may be further compatible with different types of SIM cards. The SIM card interface 195 may be further compatible with the external storage card. The terminal device 100 interacts with a network via the SIM card, to implement a call function, a data communication function, and the like. In some embodiments, the terminal device 100 uses an eSIM, namely, an embedded SIM card. The eSIM card may be embedded in the terminal device 100, and cannot be separated from the terminal device 100.

A software system of the terminal device 100 may use a layered architecture, an event-driven architecture, a micro core architecture, a micro service architecture, or a cloud architecture. In this embodiment of this application, an Android system with a layered architecture is used as an example to describe the software structure of the terminal device 100.

FIG. 3 is a block diagram of a software structure of a terminal device 100 according to an embodiment of this application. In a layered architecture, software is divided into several layers, and each layer has a clear role and task. The layers communicate with each other via a software interface. In some embodiments, the Android system is divided into four layers that are respectively an application layer, an application framework layer, an Android runtime (Android runtime) and a system library, and a kernel layer from top to bottom. The application layer may include a series of application packages.

As shown in FIG. 3, the application packages may include applications such as Call (also referred to as Phone), Camera, Gallery, Calendar, Cell, Map, Navigation, WLAN, Bluetooth, Music, Video, and Message.

In embodiments of this application, the call application can implement a satellite call. Optionally, the call application may be a satellite call application, or may be an application that loads a satellite call function based on a cellular call.

The application framework layer provides an application programming interface (application programming interface, API) and a programming framework for applications at the application layer. The application framework layer includes some predefined functions.

As shown in FIG. 3, the application framework layer may include a deviation determining module, a window manager, a content provider, a view system, a telephony manager, a resource manager, a notification manager, and the like.

The deviation determining module is configured to determine a deviation between an azimuth angle of an antenna radiation direction and an azimuth angle of a satellite transmission link direction, to obtain an azimuth angle deviation, and determine a deviation between a pitch angle of the antenna radiation direction and a pitch angle of the satellite transmission link direction, to obtain a pitch angle deviation. The azimuth angle and the pitch angle of the antenna radiation direction of the terminal device may be obtained by a sensor driver at a driving layer. The azimuth angle and the pitch angle of the satellite transmission link direction may be obtained by parsing a received satellite signal. This is not limited in embodiments of this application.

The window manager is configured to manage a window program. The window manager may obtain a size of a display screen, determine whether there is a status bar, perform screen locking, perform screen capturing, and the like.

The content provider is configured to store and obtain data, and enable the data to be accessible by an application. The data may include a video, an image, audio, calls made and answered, a browsing history, favorites, an address book, and the like.

The view system includes a visual control, for example, a control for displaying text or a control for displaying a picture. The view system may be configured to build an application. A display interface may include one or more views. For example, a display interface including a message notification icon may include a view for displaying text and a view for displaying a picture.

The telephony (telephony) manager, as a communication layer in a call path, is configured to provide a communication function for the terminal device 100, for example, call status management (including connecting, hanging-up, and the like), communication signal management, communication status management, and the like. In this embodiment of this application, the telephony manager is not only configured to provide a cellular communication function, but also configured to provide a satellite communication function.

The resource manager provides a variety of resources, such as localized character strings, icons, pictures, layout files, and video files, for the applications.

The notification manager enables the application to display notification information in a status bar. The notification messages may be used for conveying an informative message that may disappear automatically after a short period of time without user interaction. For example, the notification manager is used for informing completion of downloading, for message alerts, and the like. The notification manager may alternatively provide, on a status bar at the top of the system, a notification in the form of a chart or scroll bar text, for example, a notification of an application running in the background, or provide, on a screen, a notification in the form of a dialog window. For example, text information is prompted in the status bar, an alert sound is made, the terminal device vibrates, or an indicator light blinks.

The Android runtime includes a core library and a virtual machine. The Android runtime is responsible for scheduling and managing the Android system.

The kernel library includes two parts: a function that needs to be invoked in Java language and a kernel library of Android.

The application layer and the application framework layer are run in the virtual machine. The virtual machine executes Java files of the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library supports a plurality of audio and video encoding formats, such as MPEG 4, H.264, MP3, AAC, AMR, JPG, and PNG.

The three-dimensional graphics processing library is configured to implement three-dimensional drawing, image rendering, compositing, and layer processing.

The 2D graphics engine is a drawing engine for 2D drawing.

Optionally, in this embodiment of this application, a software architecture of the terminal device 100 may further include a hardware abstraction layer (HAL) (not shown in FIG. 3), and the HAL layer may include a wireless communication interface layer. For example, the wireless communication interface layer may include an AT (attention) instruction client (client).

The kernel layer is a layer between hardware and software. The kernel layer includes at least a display driver, a camera driver, an audio driver, a sensor driver, serial port driver, and the like. Optionally, the sensor driver may include a magnetic sensor driver, a gyroscope driver, and the like. The sensor driver is configured to drive a corresponding sensor, to collect sensor data. For example, in this embodiment, the magnetic sensor driver may drive the magnetometer, to obtain the orientation of the reference direction of the terminal device in the geomagnetic coordinate system, so as to determine the azimuth angle, the pitch angle, and the like of the antenna radiation direction of the terminal device. The gyroscope driver may also drive a gyroscope, to obtain a motion attitude of the terminal device, so as to determine the azimuth angle, the pitch angle, and the like of the antenna radiation direction of the terminal device.

The serial port driver is configured to drive a related module of a hardware layer of the terminal device to operate, for example, drive the satellite baseband processor to implement satellite communication, or drive the modem processor to operate to implement cellular communication.

For convenience of understanding, in the following embodiments of this application, with a terminal device having the structures shown in FIG. 1 to FIG. 3 as an example, a satellite call method provided in embodiments of this application is described in detail with reference to the accompanying drawings and application scenarios.

First, a display process of satellite-alignment indication information and prompt information in a satellite call process is described.

It may be understood that before making a satellite call by using the terminal device, a user needs to perform a satellite-alignment operation on the terminal device. Specifically, the terminal device may measure and calculate an azimuth angle and a pitch angle of an antenna radiation direction of the terminal device in real time by using a gyroscope sensor, a magnetometer sensor, and another sensor. In addition, the terminal device may measure or obtain, through parsing and calculation, an azimuth angle and a pitch angle of a satellite transmission link direction. The satellite transmission link direction is a direction from a position of the terminal device to a position of a satellite (also referred to as a first satellite) that communicates with the terminal device. Based on this, the terminal device may determine a deviation between the azimuth angle of the antenna radiation direction and the azimuth angle of the satellite transmission link direction, to obtain an azimuth angle deviation, and determine a deviation between the pitch angle of the antenna radiation direction and the pitch angle of the satellite transmission link direction, to obtain a pitch angle deviation.

The terminal device may display the azimuth angle deviation and the pitch angle deviation on an interface. When the terminal device determines, based on the azimuth angle deviation and the pitch angle deviation, that the antenna radiation direction is not aligned with the satellite needing communication, the terminal device may display satellite-alignment guiding information. The satellite-alignment guiding information prompts and guides the user to adjust an attitude of the terminal device, so that the antenna radiation direction is aligned with the satellite. When the terminal device determines, based on the azimuth angle deviation and the pitch angle deviation, that the antenna radiation direction is aligned with the satellite, the terminal device may display prompt information indicating successful satellite alignment, to prompt the user that the antenna radiation direction is aligned with the satellite. Optionally, the terminal device may determine whether the azimuth angle deviation is within a preset azimuth angle range a and determine whether the pitch angle deviation is within a preset pitch angle range a, to determine whether the antenna radiation direction is aligned with the satellite.

After the satellite alignment is completed, the user may make the satellite call by using a call application in the terminal device. A call operation process is similar to a call operation process in cellular communication, and details are not described herein again.

A specific implementation of the method provided in this application in the satellite call process is described below.

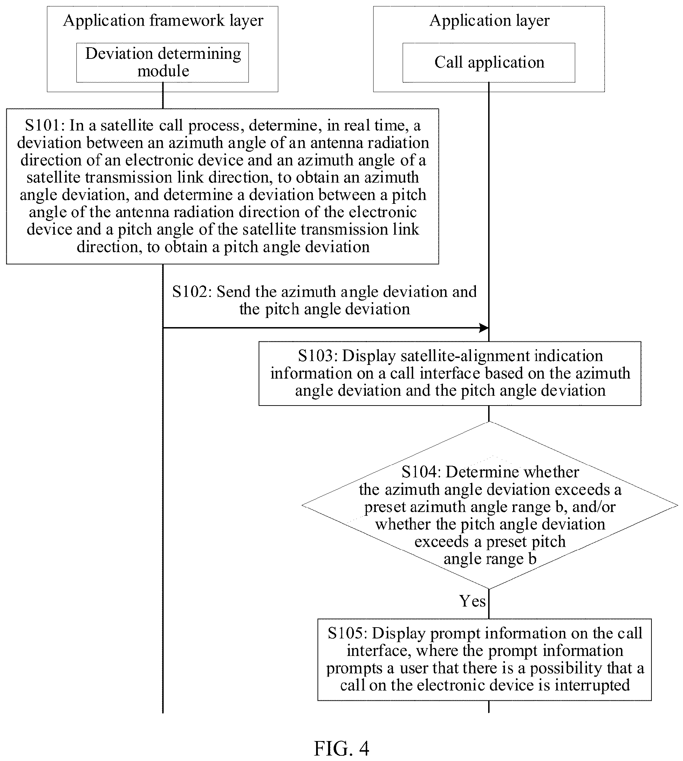

FIG. 4 is a schematic flowchart of a satellite call method according to an embodiment of this application. As shown in FIG. 4, the method includes the following steps.

S101: In a satellite call process, a deviation determining module of an application framework layer determines, in real time, a deviation between an azimuth angle of an antenna radiation direction of a terminal device and an azimuth angle of a satellite transmission link direction, to obtain an azimuth angle deviation, and determines a deviation between a pitch angle of the antenna radiation direction of the terminal device and a pitch angle of the satellite transmission link direction, to obtain a pitch angle deviation.

S102: The deviation determining module sends the azimuth angle deviation and the pitch angle deviation to a call application of an application layer.

S103: The call application displays satellite-alignment indication information on a call interface based on the azimuth angle deviation and the pitch angle deviation, where the satellite-alignment indication information indicates a satellite-alignment status of the terminal device, that is, statuses of the azimuth angle deviation and the pitch angle deviation between the antenna radiation direction and the satellite transmission link direction.

Optionally, the satellite-alignment indication information may be displayed in the form of text, a picture, an animation, or the like. This is not limited in this embodiment of this application.

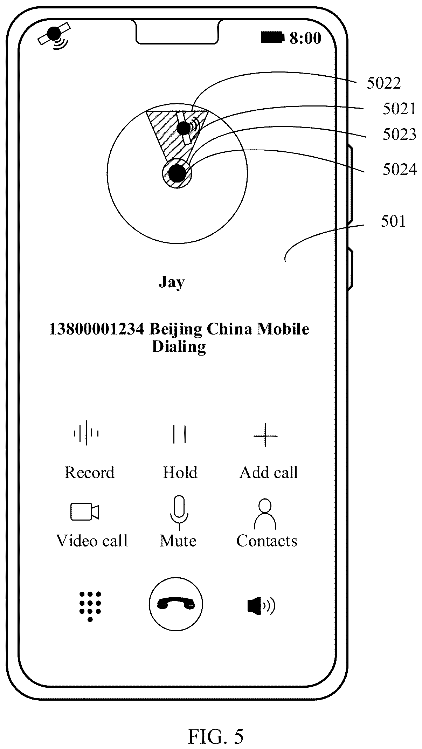

For example, FIG. 5 is a schematic diagram of a call interface according to an embodiment of this application. An example in which the terminal device is a mobile phone is used. As shown in FIG. 5, in the satellite call process, the satellite-alignment indication information may be displayed on a call interface 501. An example in which the satellite-alignment indication information is shown in the form of an animation is used. The satellite-alignment indication information includes a satellite schematic diagram 5021, a schematic region 5022 of a preset azimuth angle range b, a schematic region 5023 of a preset pitch angle range b, pitch angle schematic information 5024, and the like. If the satellite schematic diagram 5021 is located in the schematic region 5022 of the preset azimuth angle range b, it indicates that the azimuth angle deviation is within the preset azimuth angle range b. If the pitch angle schematic information 5024 is located in the schematic region 5023 of the preset pitch angle range b, it indicates that the pitch angle deviation is within the preset pitch angle range b. If a position of the mobile phone moves, and an azimuth angle and a pitch angle of the mobile phone change, a position of the satellite schematic diagram 5022 and the pitch angle schematic information 5024 may dynamically change along with position movement of the mobile phone, to form an animation effect.

S104: The call application determines whether the azimuth angle deviation exceeds the preset azimuth angle range b (also referred to as a first azimuth angle range), and/or whether the pitch angle deviation exceeds the preset pitch angle range b (also referred to as a first pitch angle range). If the azimuth angle deviation exceeds the preset azimuth angle range b, and/or the pitch angle deviation exceeds the preset pitch angle range b, step S105 is performed. If the azimuth angle deviation does not exceed the preset azimuth angle range b, and/or the pitch angle deviation does not exceed the preset pitch angle range b, step S101 is performed again.

Optionally, the preset azimuth angle range b may be the same as a preset azimuth angle range a, or may be less than or greater than the preset azimuth angle range a. The preset pitch angle range b may be the same as a preset pitch angle range a, or may be greater than or less than the preset pitch angle range a.

In a specific embodiment, the preset azimuth angle range b may be [-10°, 10°], and the preset pitch angle range b may be [-5°, 5°].

S105: The call application displays prompt information on the call interface, where the prompt information prompts a user that there is a possibility that a call on the terminal device is interrupted.

The azimuth angle deviation exceeds the preset azimuth angle range b, and/or the pitch angle deviation exceeds the preset pitch angle range b indicating that at least one of the azimuth angle deviation and the pitch angle deviation is relatively large, the current position of the terminal device deviates from a preset position, and the antenna radiation direction significantly deviates from the satellite transmission link direction. There is a high possibility of satellite alignment failure. As a result, there is a high possibility of a decrease in call quality and call interruption. Therefore, the terminal device displays the prompt information on the call interface, to prompt the user about the situation.

Optionally, the prompt information may be displayed in the form of text, a picture, an animation, or the like. This is not limited in this embodiment of this application.

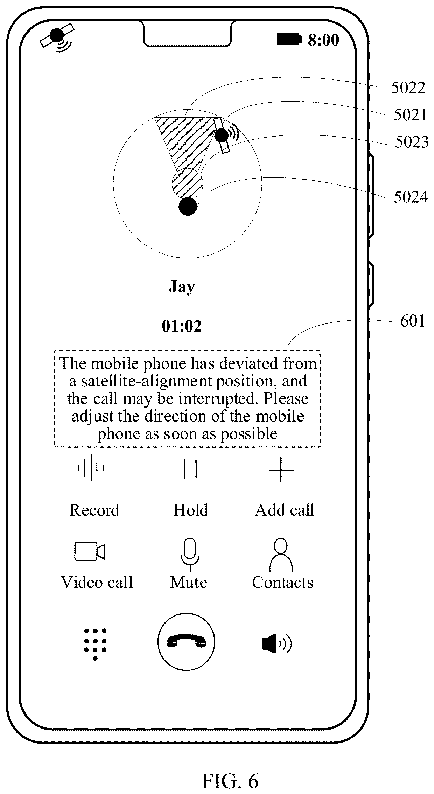

In a specific embodiment, the prompt information may be shown as 601 in FIG. 6. The prompt information 601 is displayed, for example, in the form of text, and shows information such as "The mobile phone has deviated from the satellite-alignment position, and the call may be interrupted. Please adjust the direction of the mobile phone as soon as possible" In addition, the satellite-alignment indication information changes as the position of the mobile phone changes, as shown in FIG. 6.

According to the satellite call method provided in this embodiment, in the satellite call process, the azimuth angle deviation and the pitch angle deviation are determined in real time, to display the satellite-alignment indication information on the call interface based on the azimuth angle deviation and the pitch angle. In this way, the user can learn of the satellite-alignment status of the terminal device at any time in the satellite call process, to avoid satellite alignment failure caused by moving the position of the terminal device by the user, and further avoid call interruption, thereby improving user experience. In addition, when the azimuth angle deviation exceeds the preset azimuth angle range b, and/or the pitch angle deviation exceeds the preset pitch angle range b, the prompt information is displayed on the call interface, to further prompt the user that the call interruption may occur, so that the user adjusts the position of the mobile phone in a timely manner, to avoid the call interruption, and improve the user experience.

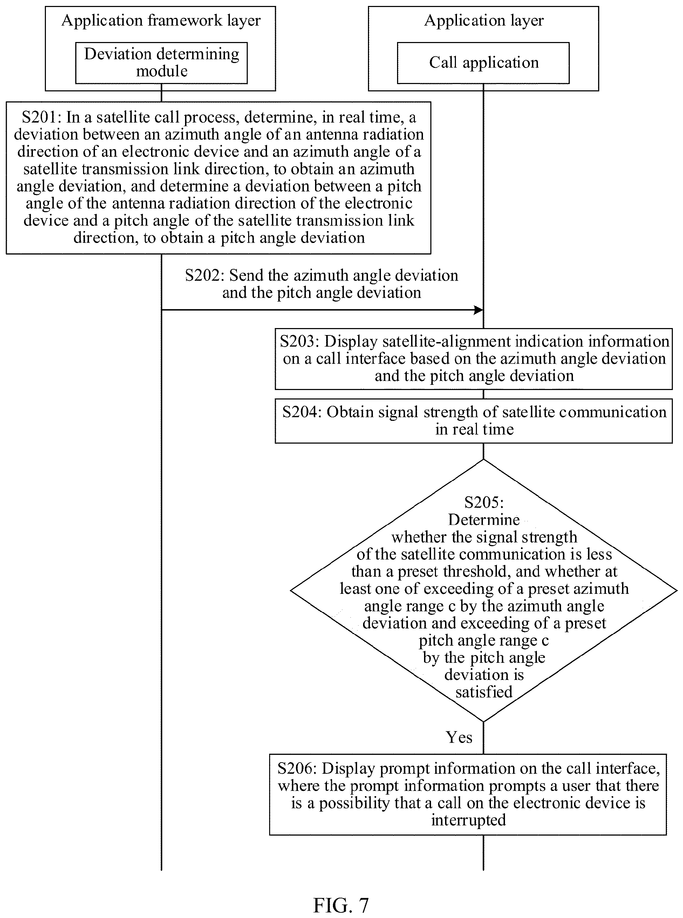

For example, FIG. 7 is a schematic flowchart of another satellite call method according to an embodiment of this application. As shown in FIG. 7, in another implementation, the satellite call method may include the following steps.

S201: In a satellite call process, a deviation determining module of an application framework layer determines, in real time, a deviation between an azimuth angle of an antenna radiation direction of a terminal device and an azimuth angle of a satellite transmission link direction, to obtain an azimuth angle deviation, and determines a deviation between a pitch angle of the antenna radiation direction of the terminal device and a pitch angle of the satellite transmission link direction, to obtain a pitch angle deviation.

This step S201 is the same as the foregoing step S101. Details are not described herein again.

S202: The deviation determining module sends the azimuth angle deviation and the pitch angle deviation to a call application of an application layer.

This step S202 is the same as the foregoing step S102. Details are not described herein again.

S203: The call application displays satellite-alignment indication information on a call interface based on the azimuth angle deviation and the pitch angle deviation, where the satellite-alignment indication information indicates a satellite-alignment status of the terminal device, that is, statuses of the azimuth angle deviation and the pitch angle deviation between the antenna radiation direction and the satellite transmission link direction.

This step S203 is the same as the foregoing step S103. Details are not described herein again.

S204: In the satellite call process, the call application obtains signal strength of satellite communication in real time.

Optionally, the call application may obtain strength of a satellite communication signal by using a telephony manager.

Optionally, the signal strength of the satellite communication may be represented in one or more of a received signal strength indicator (received signal strength indicator, RSSI), reference signal receiving power (reference signal receiving power, RSRP), reference signal receiving quality (reference signal receiving quality, RSRQ), a signal to interference plus noise ratio (signal to interference plus noise ratio, SINR), a signal to noise ratio (signal to noise ratio, SNR), and the like.

S205: The call application determines whether the signal strength of the satellite communication is less than a preset threshold, and whether the azimuth angle deviation exceeds a preset azimuth angle range c (also referred to as a second azimuth angle range) and/or the pitch angle deviation exceeds a preset pitch angle range c (also referred to as a second pitch angle range). If the signal strength of the satellite communication is less than the preset threshold, and the azimuth angle deviation exceeds the preset azimuth angle range c, and/or the pitch angle deviation exceeds the preset pitch angle range c, step S206 is performed. If the signal strength of the satellite communication is not less than the preset threshold, and the azimuth angle deviation does not exceed the preset azimuth angle range c, and/or the pitch angle deviation does not exceed the preset pitch angle range c, step S201 is performed again.

In other words, the call application determines whether the signal strength of the satellite communication is less than the preset threshold, whether the azimuth angle deviation exceeds the preset azimuth angle range c, and whether the pitch angle deviation exceeds the preset pitch angle range c. If any one of the following three cases is satisfied, step S206 is performed; or none of the following three cases is satisfied, step S201 is performed again.

Case 1: The signal strength is less than the preset threshold, and the azimuth angle deviation exceeds the preset azimuth angle range c.

Case 2: The signal strength is less than the preset threshold, and the pitch angle deviation exceeds the preset pitch angle range c.

Case 3: The signal strength is less than the preset threshold, the azimuth angle deviation exceeds the preset azimuth angle range c, and the pitch angle deviation exceeds the preset pitch angle range c.

Optionally, the preset threshold may be set based on an actual requirement. The preset azimuth angle range c may be the same as a preset azimuth angle range b, or may be different from the preset azimuth angle range b. The preset pitch angle range c may be the same as a preset pitch angle range b, or may be different from the preset pitch angle range c.

The signal strength of the satellite communication is less than the preset threshold, indicating that the signal strength is weak, current quality of satellite communication decreases, and call interruption may occur. The azimuth angle deviation exceeds the preset azimuth angle range c, and/or the pitch angle deviation exceeds the preset pitch angle range c, indicating that at least one of the azimuth angle deviation and the pitch angle deviation is relatively large, the current position of the terminal device deviates from a preset position, and the antenna radiation direction significantly deviates from the satellite transmission link direction. There is a high possibility of satellite alignment failure, further indicating that there is a high possibility of a decrease in call quality and call interruption on the terminal device. Therefore, the terminal device displays the prompt information on the call interface, to prompt the user about the situation.

Optionally, the prompt information may be the same as or similar to the prompt information in the foregoing embodiment, and details are not described again.

In a specific embodiment, the preset azimuth angle range c is greater than the preset azimuth angle range b, and/or the preset pitch angle range c is greater than the preset pitch angle range b. In other words, at least one of that the preset azimuth angle range c is greater than the preset azimuth angle range b, and that the preset pitch angle range c is greater than the preset pitch angle range b is satisfied. For example, the preset azimuth angle range b may be [-12°, 12°], and the preset pitch angle range b may be [-7°, 7°].

In this embodiment, compared with the solution shown in FIG. 4, that the preset azimuth angle range c is greater than the preset azimuth angle range b, and/or the preset pitch angle range c is greater than the preset pitch angle range b means that determining conditions of the azimuth angle deviation and the pitch angle deviation are relaxed. In this way, the relaxed azimuth angle deviation and pitch angle deviation are used together with the signal strength of the satellite communication as a determining condition, to determine a current call quality condition, so that the determining condition is not excessively severe while accuracy of a determining result is improved, so that the user is not disturbed by excessively frequently displaying of the prompt information, thereby further improving user experience.

S206: The call application displays the prompt information on the call interface, where the prompt information prompts the user that there is a possibility that a call on the terminal device is interrupted.

This step S206 is the same as the foregoing step S105. Details are not described herein again.

According to the satellite call method provided in this embodiment, in the satellite call process, the azimuth angle deviation and the pitch angle deviation are obtained in real time, to display the satellite-alignment indication information on the call interface based on the azimuth angle deviation and the pitch angle. In this way, the user can learn of the satellite-alignment status of the terminal device at any time in the satellite call process, to avoid satellite alignment failure caused by moving the position of the terminal device by the user, and further avoid call interruption, thereby improving user experience. In addition, in the satellite call method provided in this embodiment, the signal strength of the satellite communication is further obtained in real time, when the signal strength of the satellite communication is less than the preset threshold, and when the azimuth angle deviation exceeds the preset azimuth angle range c, and/or the pitch angle deviation exceeds the preset pitch angle range c, the prompt information is displayed on the call interface, to further prompt the user that the call interruption may occur, so that the user adjusts the position of the mobile phone in a timely manner, to avoid the call interruption, and improve the user experience. In this method, the signal strength of the satellite communication is added to a determining condition for displaying the prompt information, so that the terminal device displays the prompt information only when the signal strength is weak and at least one of the azimuth angle deviation and the pitch angle deviation is relatively large, to improve call quality determining accuracy, so as to improve prompt information display accuracy, thereby improving the user experience.

Selection of a call mode and displaying of a corresponding call interface in the satellite call process are described below.

It may be understood that generally, a call mode of the terminal device may include a wireless audio device mode (also referred to as a second mode), a wired audio device mode (also referred to as a first mode), a hands-free mode, a headset mode, and the like. The wireless audio device mode is a mode for calling via an audio device in a wireless connection to the terminal device. The audio device in the wireless connection to the terminal device may be, for example, a sound box connected to the terminal device via Bluetooth, an earphone connected to the terminal device via Wi-Fi, or a vehicle-mounted device connected to the terminal device via Bluetooth. A wireless connection manner between the audio device and the terminal device, a specific type of the audio device, and the like are not limited in embodiments of this application. The wired audio device mode is a mode for calling via an audio device in a wired connection to the terminal device. The audio device in the wired connection to the terminal device may be, for example, a sound box, an earphone, or a vehicle-mounted terminal device in a wired connection to the terminal device. The hands-free mode is a mode for calling via a speaker, a microphone, and the like of the terminal device. The headset mode is a mode for calling via a receiver, a microphone, and the like of the terminal device.

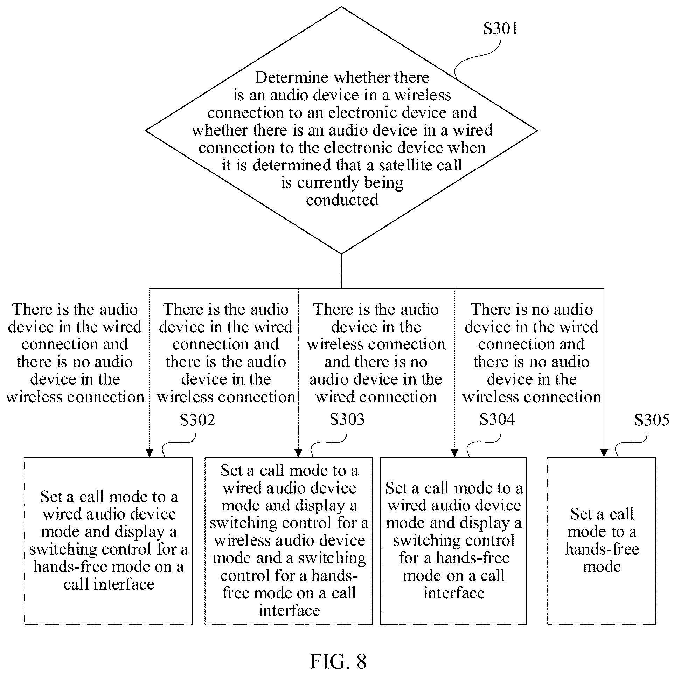

For example, FIG. 8 is a schematic flowchart of still another satellite call method according to an embodiment of this application. The method may be implemented by using a call application of an application layer. As shown in FIG. 8, the method may include the following steps.

S301: Determine whether there is an audio device in a wireless connection to a terminal device and whether there is an audio device in a wired connection to the terminal device when it is determined that a satellite call is currently in progress.

Optionally, the call application subscribes to a connection status of the audio device to an earphone interface, a Bluetooth module, a Wi-Fi module, and the like in advance. When the earphone interface is connected to the audio device, or the Bluetooth module and the Wi-Fi module are connected to the audio device, these modules may send a notification to the call application, so that the call application can learn a connection status between the terminal device and the audio device in a timely manner.

S302: Set the call mode to the wired audio device mode and display a switching control for the hands-free mode on a call interface if there is the audio device in the wired connection to the terminal device and there is no audio device in a wireless connection to the terminal device. The switching control for the hands-free mode is configured to switch the call mode to the hands-free mode.

It should be noted that, in this case, the call interface does not include a switching control for the headset mode, or the call interface includes the switching control for the headset mode, but a function of the switching control for the headset mode is blocked and cannot be operated, that is, the terminal device blocks a response to an operation (that is, a first operation) of tapping, by the user, the switching control for the headset mode. That is, in this case, the headset mode is unavailable. Optionally, when a function of the headset mode is blocked, the switching control for the headset mode may be displayed in a dimmed state, so that the user can learn that the mode is unavailable more intuitively, thereby improving user experience.

After the user taps the switching control for the hands-free mode, to switch the call mode to the hands-free mode, the switching control for the hands-free mode on the call interface may be replaced with a switching control for the wireless audio device mode, or a function of the switching control for the hands-free mode on the call interface is blocked and displayed in a dimmed state, and the switching control for the wireless audio device mode is additionally displayed on the call interface. The switching control for the wireless audio device mode is configured to switch the call mode to the wireless audio device mode. In other words, when there is the audio device in the wired connection to the terminal device and there is no audio device in the wireless connection to the terminal device, the call mode of the terminal device may be switched between the hands-free mode and the wired audio device mode.

It may be understood that each solution provided in this embodiment may be combined with the solutions shown in the embodiments in FIG. 4 to FIG. 6. Specifically, according to the solution provided in this embodiment, in addition to the switching controls for various call modes, satellite-alignment indication information, prompt information, and the like may be further displayed on the call interface. This is not limited in embodiments of this application.

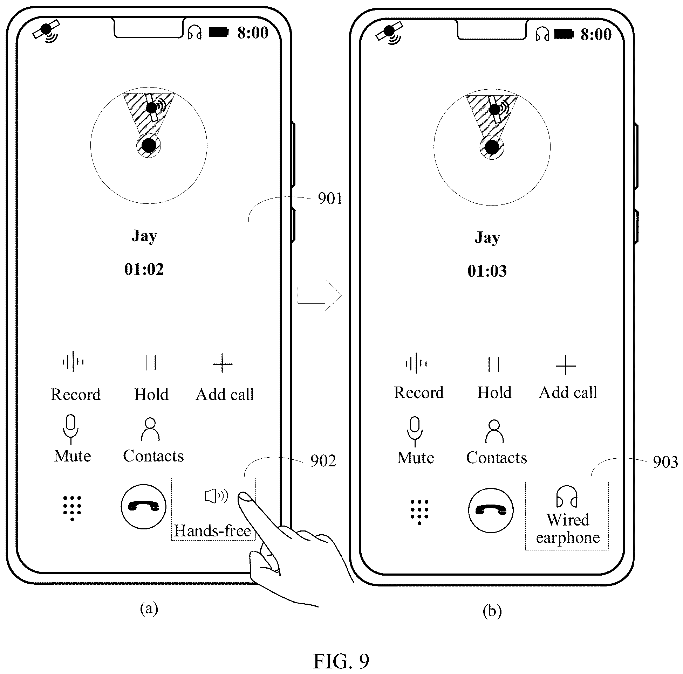

For example, FIG. 9 is a schematic diagram of still another call interface according to an embodiment of this application. As shown in section (a) in FIG. 9, the current terminal device is in a wired connection to an audio device (where a wired earphone is used as an example), and is not in a wireless connection to any audio device. In this scenario, the call application sets the call mode to the wired audio device mode. The call interface may be shown as 901 in the figure, and the call interface 901 may include a switching control 902 for the hands-free mode.

The user may switch the call mode to the hands-free mode by tapping the switching control 902 for the hands-free mode, and the switching control 902 for the hands-free mode on the call interface 901 is replaced with a switching control 903 (shown as "wired earphone" in the figure) for the wired audio device mode, as shown in section (b) in FIG. 9.

S303: Set the call mode to the wired audio device mode and display the switching control for the wireless audio device mode and the switching control for the hands-free mode on the call interface, if there is the audio device in the wired connection to the terminal device and there is the audio device in the wireless connection to the terminal device.

Different from step S302, in step S303, the terminal device is in the wired connection to the audio device, and is in the wireless connection to the audio device. In this case, the call interface may include switching controls for two call modes. One is the switching control for the hands-free mode, and the other is the switching control for the wireless audio device mode. In this way, the user may select to switch the call mode to the hands-free mode or the wireless audio device mode by tapping a corresponding switching control based on a requirement.

It should be noted that, in this case, the call interface does not include the switching control for the headset mode either, or the call interface includes the switching control for the headset mode, but the function of the switching control for the headset mode is blocked and cannot be operated.

Optionally, the switching control for the hands-free mode and the switching control for the wireless audio device may be directly set on the call interface, or a call mode selection control (also referred to as a first control) may be set. After the user taps the call mode selection control, the switching control for the hands-free mode and the switching control for the wireless audio device are further displayed. A specific display manner of the switching control for the wireless audio device mode and the switching control for the hands-free mode is not limited in this embodiment of this application.

After the user taps the switching control for the wireless audio device mode and the switching control for the hands-free mode, and switches the call mode to the hands-free mode or the wireless audio device mode, the switching control tapped by the user on the interface is no longer displayed, or its function is blocked, and the switching control for the wired audio device mode is displayed on the interface. In other words, when there is the audio device in the wired connection to the terminal device and there is the audio device in the wireless connection to the terminal device, the call mode of the terminal device may be switched between the wired audio device mode, the hands-free mode, and the wireless audio device mode.

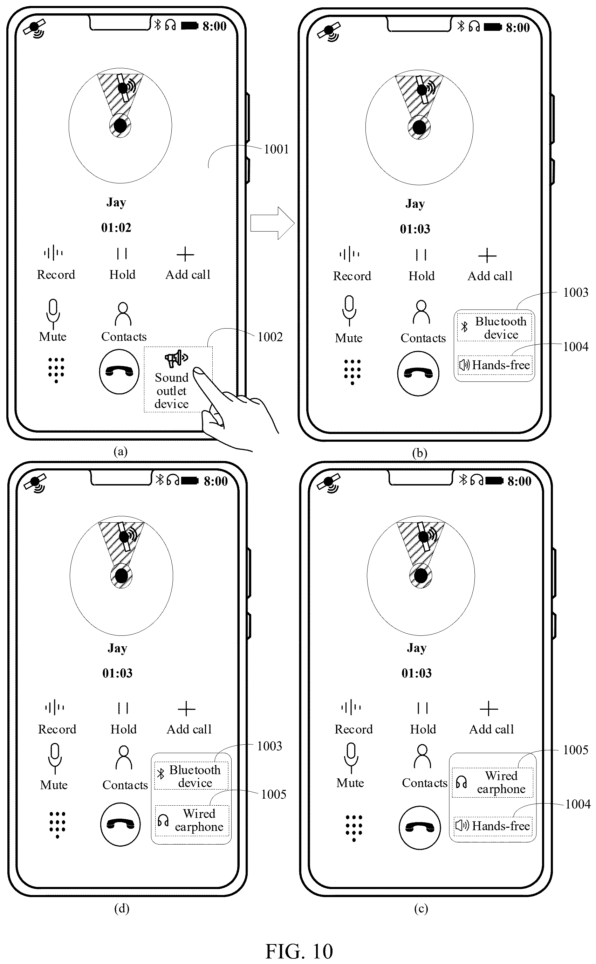

For example, FIG. 10 is a schematic diagram of still another call interface according to an embodiment of this application. As shown in section (a) in FIG. 10, the current terminal device is in a wired connection to an audio device (where a wired earphone is used as an example), and is in a wireless connection to an audio device (where an example in which the audio device is connected via Bluetooth is used). In this scenario, the call application sets the call mode to the wired audio device mode. The call interface may be shown as 1001 in the figure, and the call interface 1001 may include a call mode selection control 1002 (shown as "sound outlet device" control in the figure).

The user taps the "sound outlet device" control 1002, and a switching control 1003 (shown as "Bluetooth device" in the figure) for the wireless audio device mode and a switching control 1004 for the hands-free mode are displayed on the interface, as shown in section (b) in FIG. 10.

The user may switch the call mode to the wireless audio mode by tapping the switching control 1003 for the wireless audio device mode, and then the interface reverts to the interface 1001 shown in section (a) in FIG. 10. If the user taps the call mode selection control 1002 on the interface 1001, a switching control 1005 (shown as "wired earphone" in the figure) for the wired audio device mode and the switching control 1004 for the hands-free mode are displayed on the interface, as shown in section (c) in FIG. 10.

The user may switch the call mode to the hands-free mode by tapping the switching control 1004 for the hands-free mode, and then the interface reverts to the interface 1001 shown in section (a) in FIG. 10. If the user taps the call mode selection control 1002 on the interface 1001, the switching control 1005 (shown as "wired earphone" in the figure) for the wired audio device mode and the switching control 1003 (shown as "Bluetooth device" in the figure) for the wireless audio device mode are displayed on the interface, as shown in section (d) in FIG. 10.

S304: Set the call mode to the wireless audio device mode and display the switching control for the hands-free mode on the call interface if there is the audio device in the wireless connection to the terminal device and there is no audio device in the wired connection to the terminal device.

In this case, the call interface does not include the switching control for the headset mode either, or the call interface includes the switching control for the headset mode, but the function of the switching control for the headset mode is blocked and cannot be operated.

Similar to step S302, in this case, the call mode of the terminal device may be switched between the wireless audio device mode and the hands-free mode. Details are not described again.

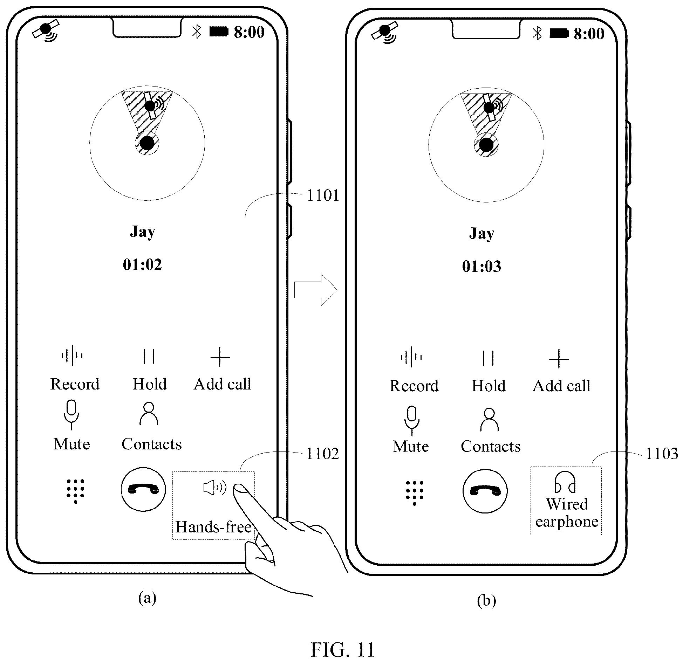

For example, FIG. 11 is a schematic diagram of still another call interface according to an embodiment of this application. As shown in section (a) in FIG. 11, the current terminal device is in a connection to an audio device (where an example in which the audio device is connected via Bluetooth is used), and is not in a wired connection to any audio device. In this scenario, the call application sets the call mode to the wireless audio device mode. The call interface may be shown as 1101 in the figure, and the call interface 1101 may include a switching control 1102 for the hands-free mode.

The user may switch the call mode to the hands-free mode by tapping the switching control 1102 for the hands-free mode, and the switching control 1102 for the hands-free mode on the call interface 1101 is replaced with a switching control 1103 (shown as "Bluetooth device" in the figure) for the wireless audio device mode, as shown in section (b) in FIG. 11.

S305: Set the call mode to the hands-free mode if there is no audio device in the wireless connection to the terminal device and there is no audio device in the wired connection to the terminal device.

In this case, the call interface does not include the switching control for the headset mode either, or the call interface includes the switching control for the headset mode, but the function of the switching control for the headset mode is blocked and cannot be operated.

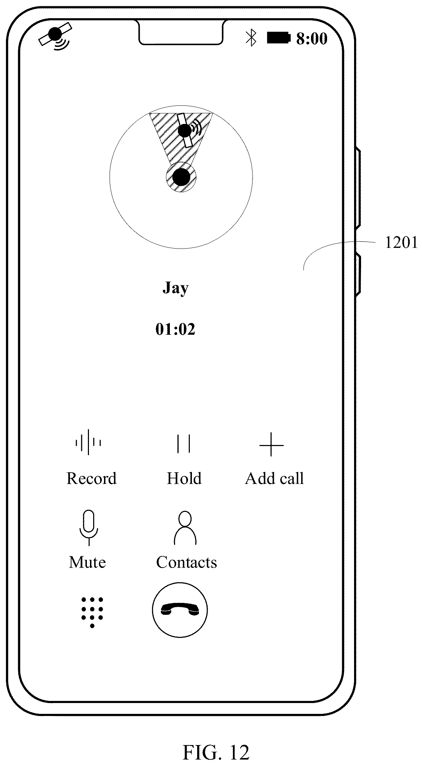

For example, FIG. 12 is a schematic diagram of still another call interface according to an embodiment of this application. As shown in FIG. 12, the current terminal device is not in a wireless connection to any audio device and is not in a wired connection to any audio device. In this scenario, the call application sets the call mode to the hands-free mode. The call interface may be shown as 1201 in FIG. 12, and the call interface 1201 does not include the switching control for the headset mode, and does not include a switching control for another call mode.

It should be noted that step S301 to step S305 may be performed in real time, or may be performed periodically, or may be performed when the audio device in the wired connection or the wireless connection to the terminal device changes. This is not limited in embodiments of this application.

In conclusion, in embodiments of this application, in a satellite call process, a call mode is intelligently set based on a status of an audio device currently in a wireless connection to a terminal device and a status of an audio device currently in a wired connection to the terminal device, and a switching control for a call mode is displayed on an interface, to meet a plurality of use scenarios of a user, thereby improving user experience. Moreover, when the call mode is set, a headset mode is not set, and a switching control for the headset mode is not displayed on the call interface, or the switching control for the headset mode is displayed, but a function of the switching control is blocked, so that the switching control cannot be operated. In this way, in the satellite call process, the user cannot make a call using the headset mode. Therefore, impact of radiation on the head of the user in the satellite call process can be reduced, thereby improving user experience. In addition, this can prevent the user from randomly moving a position of the terminal device due to using of the headset mode, and the terminal device does not deviate from a satellite-alignment position, to avoid call interruption, thereby further improving the user experience.

The above describes in detail examples of the satellite call method provided in embodiments of this application. It may be understood that, to implement the foregoing functions, the terminal device includes corresponding hardware and/or software modules for performing the functions. A person skilled in the art should be easily aware that, in combination with units and algorithm steps of the examples described in embodiments disclosed in this specification, this application can be implemented in the form of hardware or a combination of hardware and computer software. Whether a function is performed by hardware or hardware driven by computer software depends on particular applications and design constraints of the technical solutions. A person of skill in the art may use different methods to implement the described functions with reference to embodiments for each particular application, but it should not be considered that the implementation exceeds the scope of this application.

In this embodiment of this application, functional modules of the terminal device may be obtained through division based on the foregoing method example. For example, each functional module may be obtained through division based on each corresponding function, such as a detection unit, a processing unit, and a display unit, or two or more functions may be integrated into one module. The integrated module may be implemented in the form of hardware, or may be implemented in the form of a software functional module. It should be noted that, in embodiments of this application, module division is an example, and is merely a logical function division. In actual implementation, another division manner may be used.

It should be noted that all related content of the steps in the foregoing method embodiments may be cited in function descriptions of corresponding functional modules. Details are not described herein again.

The terminal device provided in this embodiment is configured to perform the satellite call method, and therefore can achieve a same effect as the foregoing implementation method.

When an integrated unit is used, the terminal device may further include a processing module, a storage module, and a communication module. The processing module may be configured to control and manage an action of the terminal device. The storage module may be configured to support the terminal device in executing stored program code, data, and the like. The communication module may be configured to support communication between the terminal device and another device.

The processing module may be a processor or a controller. The processing module may implement or execute various example logical blocks, modules, and circuits described with reference to content disclosed in this application. The processor may alternatively be a combination for implementing computing functions, for example, a combination including one or more microprocessors, or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another terminal device.

In an embodiment, when the processing module is a processor and the storage module is a memory, the terminal device in this embodiment may be a device having the structure shown in FIG. 1.

An embodiment of this application further provides a computer-readable storage medium. The computer-readable storage medium stores a computer program. When the computer program is executed by a processor, the processor is enabled to perform the satellite call method in any one of the embodiments.

An embodiment further provides a computer program product. When the computer program product is run on a computer, the computer is enabled to perform the related steps, to implement the satellite call method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the satellite call method in the foregoing method embodiments.

The terminal device, the computer-readable storage medium, the computer program product, or the chip provided in this embodiment may be configured to perform the corresponding method provided above. Therefore, for beneficial effects that can be achieved, refer to the beneficial effects of the corresponding method provided above. Details are not described herein again.

Based on the descriptions of the implementations, a person skilled in the art may understand that for the purpose of convenient and brief descriptions, division into the functional modules is merely used as an example for description. In an actual application, the functions can be allocated to different functional modules for implementation based on a requirement. In other words, an inner structure of an apparatus is divided into different functional modules, to implement all or some of the foregoing described functions.

In the several embodiments provided in this application, it should be understood that the disclosed apparatus and method may be implemented in other manners. For example, the described apparatus embodiment is merely an example. For example, the module or unit division is merely logical function division and may be other division during actual implementations. For example, a plurality of units or components may be combined or integrated into another apparatus, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of this embodiment.

In addition, functional units in embodiments of this application may be integrated into one processing unit, each of the units may exist alone physically, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code such as a USB flash drive, a removable hard disk drive, a read-only memory (read-only memory, ROM), a random access memory (random access memory, RAM), a magnetic disk, or an optical disc.

The foregoing descriptions are merely specific implementations of this application, and are not intended to limit the protection scope of the application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite call method, performed by a terminal device, wherein the method comprises:
making a satellite call and displaying a call interface based on communication with a first satellite;
determining an azimuth angle deviation and a pitch angle deviation, wherein the azimuth angle deviation is a deviation between an azimuth angle of an antenna radiation direction of the terminal device and an azimuth angle of a satellite transmission link direction, the pitch angle deviation is a deviation between a pitch angle of the antenna radiation direction and a pitch angle of the satellite transmission link direction, and the satellite transmission link direction is a direction from a position of the terminal device to a position of the first satellite; and
displaying prompt information on the call interface if the azimuth angle deviation and the pitch angle deviation satisfy a preset condition, wherein the prompt information prompts a user that there is a possibility that the terminal device has a call terminal.

2. The method according to claim 1, wherein the preset condition is:
the azimuth angle deviation exceeds a first azimuth angle range, and/or the pitch angle deviation exceeds a first pitch angle range.

3. The method according to claim 1, wherein before the displaying prompt information on the call interface if the azimuth angle deviation and the pitch angle deviation satisfy a preset condition, the method further comprises:
obtaining signal strength of communication with the first satellite, wherein
the preset condition is: the signal strength is less than a preset threshold, and the azimuth angle deviation exceeds a second azimuth angle range; or
the preset condition is: the signal strength is less than the preset threshold, and the pitch angle deviation exceeds a second pitch angle range; or
the preset condition is: the signal strength is less than the preset threshold, the azimuth angle deviation exceeds the second azimuth angle range, and the pitch angle deviation exceeds the second pitch angle range.

4. The method according to claim 3, wherein the call interface comprises satellite-alignment indication information, and the satellite-alignment indication information indicates a status of alignment of the terminal device with the first satellite.

5. The method according to claim 4, wherein the satellite-alignment indication information is determined based on the azimuth angle deviation and the pitch angle deviation.

6. A satellite call method, performed by a terminal device, wherein the method comprises:
making a satellite call based on communication with a first satellite, wherein a call mode of the satellite call is a mode other than a headset mode; and
displaying a call interface, wherein the call interface does not comprise a switching control for the headset mode, or the call interface comprises the switching control for the headset mode but the terminal device blocks a response to a first operation, wherein the first operation is an operation that a user taps the switching control for the headset mode, and the switching control for the headset mode is configured to switch the call mode to the headset mode.

7. The method according to claim 6, wherein the method further comprises:
determining that the call mode is a first mode if there is a first audio device in a wired connection to the terminal device, wherein the first mode is a mode for calling via the first audio device.

8. The method according to claim 7, wherein the method further comprises:
if there is the first audio device in the wired connection to the terminal device and there is no audio device in a wireless connection to the terminal device, the call interface comprises a switching control for a hands-free mode, wherein the switching control for the hands-free mode is configured to switch the call mode to the hands-free mode.

9. The method according to claim 7, wherein the method further comprises:
if there is the first audio device in the wired connection to the terminal device and there is a second audio device in a wireless connection to the terminal device, the call interface comprises a switching control for a hands-free mode and a switching control for a second mode, wherein the switching control for the hands-free mode is configured to switch the call mode to the hands-free mode, the second mode is a mode for calling via the second audio device, and the switching control for the second mode is configured to switch the call mode to the second mode.

10. The method according to claim 7, wherein the method further comprises:
if there is the first audio device in the wired connection to the terminal device and there is a second audio device in a wireless connection to the terminal device, the call interface comprises a first control; and
displaying a switching control for a hands-free mode and a switching control for a second mode in response to the user tapping the first control, wherein the switching control for the hands-free mode is configured to switch the call mode to the hands-free mode, the second mode is a mode for calling via the second audio device, and the switching control for the second mode is configured to switch the call mode to the second mode.

11. The method according to claim 6, wherein the method further comprises:
determining that the call mode is a second mode if there is a second audio device in a wireless connection to the terminal device and there is no audio device in a wired connection to the terminal device, wherein the second mode is a mode for calling via the second audio device.

12. The method according to claim 11, wherein the call interface comprises a switching control for a hands-free mode, and the switching control for the hands-free mode is configured to switch the call mode to the hands-free mode.

13. The method according to claim 6, wherein the method further comprises:
determining that the call mode is a hands-free mode if there is no audio device in a wired connection to the terminal device and there is no audio device in a wireless connection to the terminal device.

14. The method according to any one of claims 6 to 13, wherein the method further comprises:
determining an azimuth angle deviation and a pitch angle deviation, wherein the azimuth angle deviation is a deviation between an azimuth angle of an antenna radiation direction of the terminal device and an azimuth angle of a satellite transmission link direction, the pitch angle deviation is a deviation between a pitch angle of the antenna radiation direction and a pitch angle of the satellite transmission link direction, and the satellite transmission link direction is a direction from a position of the terminal device to a position of the first satellite; and
displaying prompt information on the call interface if the azimuth angle deviation and the pitch angle deviation satisfy a preset condition, wherein the prompt information prompts the user that there is a possibility that the terminal device has a call terminal.

15. The method according to claim 14, wherein the call interface comprises satellite-alignment indication information, and the satellite-alignment indication information indicates a status of alignment of the terminal device with the first satellite.

16. A terminal device, comprising a processor, a memory, and an interface, wherein the processor, the memory, and the interface cooperate with each other to enable the terminal device to perform the methods according to any one of claims 1 to 15.

17. A computer-readable storage medium, wherein the computer-readable storage medium stores a computer program, and when the computer program is executed by a processor, the processor invokes instructions to enable the terminal device to perform the methods according to any one of claims 1 to 15.
